(19) **Europäisches Patentamt / European Patent Office / Office européen des brevets**

(11) **EP 4 342 140 B1**

(12) **EUROPEAN PATENT SPECIFICATION**

(45) Date of publication and mention
of the grant of the patent:
**22.10.2025 Bulletin 2025/43**

(21) Application number: **21728471.0**

(22) Date of filing: **17.05.2021**

(51) International Patent Classification (IPC):
**H04L 67/12** *(2022.01)*    **H04L 69/00** *(2022.01)*
**H04L 12/28** *(2006.01)*    **G05B 15/02** *(2006.01)*

(52) Cooperative Patent Classification (CPC):
**G05B 15/02; H04L 12/2821; H04L 67/12;
H04L 69/26;** G05B 2219/2642

(86) International application number:
**PCT/EP2021/063012**

(87) International publication number:
**WO 2022/242826 (24.11.2022 Gazette 2022/47)**

(54) **DETERMINING WHETHER A DEVICE CAN PERFORM AN ACTION**

BESTIMMUNG, OB EINE VORRICHTUNG EINE AKTION AUSFÜHREN KANN

DÉTERMINATION DU FAIT DE SAVOIR SI UN DISPOSITIF PEUT EFFECTUER UNE ACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **Telefonaktiebolaget LM Ericsson
(publ)
164 83 Stockholm (SE)**

(72) Inventors:
• **CYRAS, Kristijonas
169 59 Solna (SE)**
• **DAOUTIS, Marios
168 65 Bromma (SE)**
• **MUJUMDAR, Anusha Pradeep
Bangalore 560048 (IN)**

• **KATTEPUR, Ajay
Bangalore 560094 Andhra Pradesh (IN)**
• **DEMIREL, Burak
125 48 Älvsjö (SE)**

(74) Representative: **Ericsson
Patent Development
Torshamnsgatan 21-23
164 80 Stockholm (SE)**

(56) References cited:
**EP-A1- 3 506 567         US-A1- 2016 378 084
US-A1- 2018 054 376**

• **MUSLUM OZGUR OZMEN ET AL: "Discovering
Physical Interaction Vulnerabilities in IoT
Deployments", ARXIV.ORG, CORNELL
UNIVERSITY LIBRARY, 201 OLIN LIBRARY
CORNELL UNIVERSITY ITHACA, NY 14853, 3
February 2021 (2021-02-03), XP081874148**

**Description**

<u>Technical Field</u>

This disclosure relates to methods and devices in a communications network. More particularly but non-exclusively, the disclosure relates determining, in coordination with a second device, whether a first device can perform a first action.

<u>Background</u>

In a smart environment such as a smart home, there may be multiple Internet of Things (IoT) devices acting in the same space. Such devices may each have individual (e.g. private) goals that should be performed in a manner that best satisfies the user, which in a smart home, for example, may be the tenant of the home. For instance, a noise controller may have a persistent goal to keep ambient noise below a certain threshold, an audio station may have a planned goal to play music for a period of time and a kettle may receive a spontaneous goal (or instruction) from the user to boil water. In such situations, the devices need to communicate information about their intentions and collectively make a decision based on incomplete and conflicting information. For instance, an audio station and a kettle operating in a common environment may be unaware that their simultaneous functioning yields noise over the threshold set for a noise controller.

The processes of information exchange and decision making may involve inquiry, persuasion, negotiation, and deliberation among the devices. The decision may need to be taken at any given step of the interaction, with all the available yet potentially incomplete and conflicting information, or else upon a complete exchange of information (e.g. according to planned goals and constraints). In any event, collective decision-making has to exhibit desirable properties, including distributed reasoning, run-time execution, successful termination, satisfied goals and user preferences.

Argumentation protocols are a methodology that enable on-demand interaction and collective decision making of multiple devices, such as for example, sensors; smart appliances and/or other IoT devices, in shared environments. Using argumentation protocols, the devices engage in so-called dialogue games using the rules of the argumentation protocol, whereby they communicate by sending public messages which are known as "utterances". Utterances can contain claims, questions, counterclaims, supporting-claims etc. and these are sent between devices to collectively argue about their claims, including intents to take actions that allow them to achieve their individual goals. From an IoT device perspective, the main advantageous features of dialogue games are the following:

- Highly distributed collective decision making, ensuring autonomy and independence of devices, as well as adhering to geofencing requirements prevalent in IoT settings.
- Decision making at run-time, enabled by the devices' commitments to specific actions or knowledge. By replying to each others' utterances the devices effectively construct a dialogue where each utterance relates to some previous one, and the dialogue is available to all. As soon as a device makes a commitment with respect to an utterance in the dialogue (e.g. concedes or retracts a claim), the status of this commitment is fixed and propagated along other utterances in the dialogue to establish the resulting commitments of this and other devices with respect to the other utterances.

Effectively thus, the winners and losers of the game (to establish the initial claim) can be determined at any point during the dialogue, leading to on-the-fly decision making.

An example argumentation protocol that may be used in an IoT setting is found in the paper by H. Prakken, entitled "Coherence and Flexibility in Dialogue Games for Argumentation," J. Log. Comput., vol. 15, no. 6, pp. 1009-1040, Dec. 2005. Another example may be found, in the paper by X. Fan and F. Toni, entitled "A General Framework for Sound Assumption-Based Argumentation Dialogues," Artif. Intell., vol. 216, pp. 20-54, 2014, doi: 10.1016/j.artint.2014.06.001. EP 3 506 567 A1 describes a device controlling by a control unit a related device based on operation situation and comprising a communication unit transmitting time schedule and function information that the control unit generates to the related device. Furthermore, D1 discloses also a method in which an individual device, a schedule bot, or a server that learns the usage pattern of a user for each device, and actively provides a service interrelated with different devices.

<u>Dialogue Games</u>

As noted above, an argumentation protocol is procedural description (a set of rules) describing how agents are to communicate (abstractly - what information to exchange, in what order, etc). A dialogue (game) is the object created during such communication, e.g. a collection of utterances.

Normally, a dialogue game admits a main claim, expressed via the initial utterance (by some device), towards acceptance of which the devices argue. The goal is for devices to evaluate the main claim, i.e. to collectively accept or reject it, at the same time evaluating acceptance of other utterances in the dialogue.

Utterances and Dialogues

The following is *an example* of a *formal definition* of an utterance taken from X. Fan & F. Toni (2014):
**Definition 3.1.** An *utterance* from agent $a_i$ to agent $a_j$ ($i, j = 1, 2, i \neq j$) is a tuple $\langle a_i, a_j, T, C, ID \rangle$ where:

- *C* (*the content*) is of one of the following forms:

  - *claim* (*X*) for some $X \in \mathcal{L}$ (*a claim*),
  - $rl(\beta_{0 \leftarrow} \beta_{1,\ldots,} \beta_m)$ for some $\beta_{0,\ldots,}\beta_m \in \mathcal{L}$ with m $\geq$ 0 (*a rule*),
  - *asm*($\alpha$) for some $\alpha \in \mathcal{L}$ (*an assumption*),
  - *ctr*($\alpha$, β) for some $\alpha$, $\beta \in \mathcal{L}$ (*a contrary*),
  - a pass sentence $\pi$, such that $\pi \notin \mathcal{L}$.

- ID $\in \mathcal{ID} \setminus \{ID_0\}$ (*the identifier*).

- $T \in \mathcal{ID}$ (*the target*); we impose that $T < ID$.

For illustration, $< a_i, a_j, 0, claim(s), 1 >$ is an utterance from agent $a_i$ to agent $a_j$ with the content *claim*(*s*) expressing that $a_i$ claims s to be the case, where s is an object in some formal language $\mathcal{L}$. The identifier *ID* of this utterance is 1 and the target *T* is 0, by convention (this being the very first utterance).
For example, agents $a_i$ and $a_j$ can be Kettle and Noise Controller (e.g. a device configured to control noise in the environment), respectively, and *claim*(*Boil*) can represent the intention of Kettle to boil water, thus initiating a dialogue with the first utterance < *Kettle, Noise Control, 0, claim*(*Boil*), 1 >.
In what follows, the words "device" and "agent" may be used interchangeably.
The following is *an example* of a *formal definition* of a dialogue game (X. Fan & F. Toni (2014)):

Definition 3.2. A *dialogue* $\mathcal{D}_{aj}^{ai}(X)$ (*between* $a_i$, *and* $a_j$, $i, j \in \{1,2\}$, $i \neq j$, *for* $X \in \mathcal{L}$) is a sequence $\langle u_{1,\ldots,}u_n \rangle$, $n \geq 0$, where each $u_l$, $l = 1, \ldots, n$, is in $U$, and:

1. $u_1 = \langle a_i, a_{j,\_,\_,\_}\rangle$;
2. the content of $u_l$ is *claim* (*X*) iff $l = 1$;
3. the target of pass and claim utterances is $ID_0$; the target of regular utterances is not $ID_0$;
4. for every utterance $u_l = \langle \_, \_, T, \_, \_ \rangle$, such that $l > 1$ and $T \neq ID_0$, there exists some $U_k = \langle \_, \_, \_, C, T \rangle$, such that $C \neq \pi$ and $k < l$;
5. for $O \leq k < l \leq n$, if $ID_l$ is the identifier of $u_l$ and $ID_k$ is the identifier of $u_k$ then $ID_k < ID_l$.

For illustration, given a language $\mathcal{L} = \{s, a, b, c, d, g, q, r\}$, a set of identifiers $\mathcal{ID} = \mathbb{N}$ (natural numbers including 0) and initial identifier $ID_0 = 0$, a possible dialogue $\mathcal{D}_{a_2}^{a_1}(s)$ between $a_1$ and $a_2$ for claim s looks as follows:

| $a_1$, | $a_2$, |
|---|---|
| $\langle a_1, a_2, 0, \text{claim}(s), 1 \rangle$ | $\langle a_2, a_1, 0, \pi, 2 \rangle$ |
| $\langle a_1, a_2, 1, rl(s \leftarrow a), 3 \rangle$ | $\langle a_2, a_1, 3, \text{ams}(a), 4 \rangle$ |
| $\langle a_1, a_2, 4, ctr (a, q), 5 \rangle$ | $\langle a_2, a_1, 5, rl(q \leftarrow b), 6 \rangle$ |
| $\langle a_1, a_2, 6, \text{asm}(b), 7 \rangle$ | $\langle a_2, a_1, 7, ctr(b, c), 8 \rangle$ |
| $\langle a_1, a_2, 8, \text{asm}(c), 9 \rangle$ | $\langle a_2, a_1, 9, ctr(c, r), 10 \rangle$ |
| $\langle a_1, a_2, 0, \pi, 11 \rangle$ | $\langle a_2, a_1, 0, \pi, 12 \rangle$ |

Briefly:

1. $a_1$ claims *s*

2. $a_2$ passes

3. $a_1$ puts forward a rule $s \leftarrow a$ that yields s from $a$

4. $a_2$ posits that $a$ is an assumption

5. $a_1$ posits that $q$ is a contrary of $a$ (intuitively, $q$ contradicts $a$)

And similarly further until the dialogue ends with the two agents uttering pass sentences $\pi$.

To further illustrate a dialogue with a natural language reading, consider the following sets of assumptions $\mathcal{A}_\delta$, rules $\mathcal{R}_\delta$ and contraries $\mathcal{C}_\delta$ (with the a formal language $\mathcal{L}$ implicitly defined thereof):

$$\mathcal{A}_\delta = \{boy\_not\_proven\_guilty, w1\_is\_believeable, w2\_is\_believable\};$$

$$\mathcal{R}_\delta = \{boy\_innocent \leftarrow boy\_not\_proven\_guilty,$$

$$boy\_proven\_guilty \leftarrow w1\_is\_believable,$$

$$boy\_proven\_guilty \leftarrow w2\_is\_believable,$$

$$w1\_not\_believable \leftarrow w1\_contradicted\_by\_w2,$$

$$w1\_contradicted\_by\_w2 \leftarrow,$$

$$w2\_not\_believable \leftarrow w2\_has\_poor\_eyesight,$$

$$w2\_has\_poor\_eyesight \leftarrow\}$$

$$\mathcal{C}_\delta \ (boy\_not\_proven\_guilty) = \{boy\_proven\_guilty\},$$

$$\mathcal{C}_\delta \ (w1\_is\_believable) = \{w1\_is\_not\_believable\},$$

$$\mathcal{C}_\delta \ (w2\_is\_believable) = \{w2\_is\_not\_believable\}.$$

The following is an example natural language reading of a possible dialogue drawn using the above components (which are constructed from the film *Twelve Angry Men* as in X. Fan & F. Toni (2014)):

$a_1$:  The boy is innocent.
$a_2$:  The boy is innocent if he is not proven guilty.
$a_1$:  We assume the boy is not proven guilty.
$a_2$:  Proving that the boy is guilty disagrees with this assumption
$a_1$:  The boy is guilty if witness 1 is believable.
$a_2$:  We assume witness 1 is believable.
$a_1$:  Showing witness 1 cannot be believed disagrees with this assumption.
$a_1$:  Witness 1 cannot be believed if it is contradicted by witness 2.
$a_1$:  Witness 1 is indeed contradicted by witness 2.
$a_2$:  The boy is guilty if witness 2 is believable.
$a_1$:  We assume witness 2 is believable.
$a_2$:  Showing witness 2 cannot be believed disagrees with this assumption.
$a_1$:  Witness 2 cannot be believed if it has a poor eyesight.
$a_2$:  Witness 2 indeed has a poor eyesight.
$a_1$:  OK.
$a_2$:  OK.

EP 3506567 A1 discloses a technique that suggests or guides functions of home appliances to a user so that multiple home appliances can operate in association with particular functions. The document discloses a method in which an individual device, a schedule bot, or a server that learns the usage pattern of a user for each device, and actively provides a service interrelated with different devices.

US 2018/054376 A1 discloses a technique which are directed to facilitate the implementation of a digital twin of a twinned physical system. The disclosure aims to improve assessments and/or predictions for IoT associates.

US 2016/378084 A1 discloses a technique that controls a device of a region based on the information acquired in other adjacent regions.

Ozmen, M. O., Li, X., Chu, A., Celik, Z. B., Hoxha, B., and Zhang, X., discloses an IoTSeer approach in a paper titled "Discovering IoT physical channel vulnerabilities", arxiv.org, Cornell University Library, 201 Olin Library Cornell University Ithaca, Ny 14853, 3 February 2021. The authors introduced a new method that combined code analysis as well as dynamic analysis to find physical interaction vulnerabilities.

Summary

Some argumentation-based approaches have been proposed for decision making in IoT settings, see for example, the paper by E. Lovellette, H. Hexmoor, and K. Rodriguez, entitled "Automated argumentation for collaboration among cyber-physical system actors at the edge of the Internet of Things," Internet of Things, vol. 5, no. March 2019, pp. 84-96, 2019, doi: 10.1016/j.iot.2018.12.002.

However, these methods are limited to negotiation by pooling internally built arguments at once and using either argumentation semantics, game-theoretic or voting mechanisms to resolve conflicts among posited arguments. In settings such as IoT environments, actions may be time sensitive. For instance, if the planned goal for an audio station is to play music for two hours, and the spontaneous goal of boiling water during that period requires the kettle to work for a few minutes only, the devices should be able to communicate and resolve this in a manner that enables total noise to be kept below a noise threshold. For example, the kettle could commit to boiling for a few minutes and the audio station could commit to stop playing in the meantime but might resume playing after the commitment expires. Such time-based commitments are currently not taken into consideration by state-of-the-art argumentation protocols but are greatly needed in their applications to settings such as IoT. It is thus an object of embodiments herein to improve on argumentation protocols, particularly for use in IoT settings.

Thus, according to a first aspect there is a computer implemented method for determining, in coordination with a second device, whether a first device can perform a first action. The method comprises: sending a first message to the second device, wherein the first message comprises an indication of the first action to be performed by the first device, and a first time interval indicating when the first action is to be performed. The method further comprises receiving a second message from the second device according to an argumentation protocol defined between the first device and the second device, wherein the second message comprises a first response related to whether the first device can perform the first action, and a second time interval in which the first response is applicable. The first response is valid according to the argumentation protocol if the second time interval overlaps the first time interval. The method comprises exchanging subsequent messages with the second device according to the argumentation protocol, wherein each subsequent message comprises a subsequent response related to the first action, and a corresponding subsequent time interval in which said response is applicable. Each subsequent response is valid according to the argumentation protocol if the corresponding subsequent time interval overlaps the first time interval. Also, each subsequent response is valid according to the argumentation protocol if the corresponding subsequent time interval overlaps the first time interval. The first message comprises a tuple of the form:

$$\langle a_i, a_j, T, C, ID, S \rangle,$$

wherein $a_i$, is an identifier for the first device, $a_j$ is an identifier for the second device, T is a target identification number, ID is an identification number for the first message, C comprises the indication of the first action to be performed by the first device, and S is the first time interval.

According to a second aspect there is a computer implemented method for determining, in coordination with a first device, whether the first device can perform a first action. The method comprises: receiving a first message from the first device, wherein the first message comprises an indication of the first action to be performed by the first device, and a first time interval indicating when the first action is to be performed. The method further comprises sending a second message to the first

device according to an argumentation protocol defined between the first device and the second device, wherein the second message comprises a first response related to whether the first device can perform the first action, and a second time interval in which the first response is applicable. The first response is valid according to the argumentation protocol if the second time interval overlaps the first time interval. The method comprises exchanging subsequent messages with the first device according to the argumentation protocol, wherein each subsequent message comprises a subsequent response related to the first action, and a corresponding subsequent time interval in which said response is valid. Each subsequent response is valid according to the argumentation protocol if the corresponding subsequent time interval overlaps the first time interval. Also, each subsequent response is valid according to the argumentation protocol if the corresponding subsequent time interval overlaps the first time interval. The second message comprises a tuple of the form:

$$\langle a_i, a_j, T, C, ID, S \rangle,$$

wherein $a_i$, is an identifier for the second device, $a_j$ is an identifier for the first device, T is a target identification number, ID is an identification number for the second message, C comprises the first response, and S is the second time interval.

According to a third aspect there is a first device configured for determining, in coordination with a second device, whether a first device can perform a first action. The first device is configured to: send a first message to the second device, wherein the first message comprises an indication of the first action to be performed by the first device, and a first time interval indicating when the first action is to be performed. The first device is further configured to receive a second message from the second device according to an argumentation protocol defined between the first device and the second device, wherein the second message comprises a first response related to whether the first device can perform the first action, and a second time interval in which the first response is applicable. The first response is valid according to the argumentation protocol if the second time interval overlaps the first time interval. The first device is configured to exchange subsequent messages with the second device according to the argumentation protocol, wherein each subsequent message comprises a subsequent response related to the first action, and a corresponding subsequent time interval in which said response is applicable Each subsequent response is valid according to the argumentation protocol if the corresponding subsequent time interval overlaps the first time interval. The first message comprises a tuple of the form:

$$\langle a_i, a_j, T, C, ID, S \rangle,$$

wherein $a_i$, is an identifier for the first device, $a_j$ is an identifier for the second device, T is a target identification number, ID is an identification number for the first message, C comprises the indication of the first action to be performed by the first device, and S is the first time interval.

According to a fourth aspect there is a second device configured for determining, in coordination with a first device, whether the first device can perform a first action. The second device is configured to receive a first message from the first device, wherein the first message comprises an indication of the first action to be performed by the first device, and a first time interval indicating when the first action is to be performed. The second device is further configured to send a second message to the first device according to an argumentation protocol defined between the first device and the second device, wherein the second message comprises a first response related to whether the first device can perform the first action, and a second time interval in which the first response is applicable. The first response is valid according to the argumentation protocol if the second time interval overlaps the first time interval. The second device is configured to exchange subsequent messages with the first device according to the argumentation protocol, wherein each subsequent message comprises a subsequent response related to the first action, and a corresponding subsequent time interval in which said response is valid. Each subsequent response is valid according to the argumentation protocol if the corresponding subsequent time interval overlaps the first time interval. The second message comprises a tuple of the form:

$$\langle a_i, a_j, T, C, ID, S \rangle,$$

wherein $a_i$, is an identifier for the second device, $a_j$ is an identifier for the first device, T is a target identification number, ID is an identification number for the second message, C comprises the first response, and S is the second time interval.

Thus, in embodiments herein, time-sensitive interaction is introduced to argumentation protocols in order to improve IoT device collective decision-making. In IoT decision making, accounting for time-sensitive actions is crucial as actions and claims related thereto are generally time-sensitive. The contribution herein thus lies in the introduction of time carrying utterances which means that the resolution of the dialogue among agents can be predicated on timed commitments of the devices, rather than e.g., voting. The commitments can be internally and individually generated, based on e.g. the devices' goals. What is more, the prioritization of goals provides an additional means to resolve conflicts arising in the argumentation process. In summary, the disclosure herein introduces argumentation protocols with timed-commitments for collective decision making in IoT through the use of time-carrying utterances, time-based commitments and conflict-resolution among agents' utterances (and commitments thereof) based on the priority of goals.

Brief Description of the Drawings

For a better understanding and to show more clearly how embodiments herein may be carried into effect, reference will now be made, by way of example only, to the accompanying drawings, in which:

Fig. 1 illustrates a device according to some examples herein;
Fig. 2 illustrates a method according to some examples herein;
Fig. 3 illustrates a method according to some examples herein;
Fig. 4 illustrates a signal diagram between a plurality of devices according to some embodiments herein;
Fig. 5 illustrates an example dialogue game according to some embodiments herein; and
Fig. 6 illustrates an example dialogue game according to some embodiments herein.

Detailed Description

The disclosure herein relates to devices operating in a communications network (or telecommunications network). A communications network may comprise any one, or any combination of: a wired link (e.g. ASDL) or a wireless link such as Global System for Mobile Communications (GSM), Wideband Code Division Multiple Access (WCDMA), Long Term Evolution (LTE), New Radio (NR), WiFi, Bluetooth or future wireless technologies. The skilled person will appreciate that these are merely examples and that the communications network may comprise other types of links. A wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

The disclosure herein relates to devices connected to (e.g. operating or communicating over) a communications network. Some embodiments herein relate to internet of things (IoT) devices. For example, IoT devices operating in a local geographical environment.

Examples of IoT devices are sensors, metering devices such as power meters, industrial machinery, or home or personal appliances (e.g. refrigerators, televisions, etc.) personal wearables (e.g., watches, fitness trackers, etc.). Other examples of IoT devices include but are not limited to smart devices in the home, e.g. such as smart kettles, toasters, radios, lightbulbs or other light fixtures, smart bins and/or smart meters (e.g. such as energy meters or water meters).

More generally, an IoT device may represent a machine or other device that performs monitoring and/or measurements, and transmits the results of such monitoring and/or measurements to another device and/or a network node. The device may in this case be a machine-to-machine (M2M) device, which may in a 3GPP context be referred to as an MTC device. As one particular example, the device may be a device implementing the 3GPP narrow band internet of things (NB-IoT) standard.

More generally, the disclosure herein applies to the operation of any device or user equipment (UE) capable, configured, arranged and/or operable to communicate wirelessly with network nodes and/or other wireless devices. A device may be a user equipment (UE) or wireless device (WD). Communicating wirelessly may involve transmitting and/or receiving wireless signals using electromagnetic waves, radio waves, infrared waves, and/or other types of signals suitable for conveying information through air. In some embodiments, a device may be configured to transmit and/or receive information without direct human interaction. For instance, a device may be designed to transmit information to a network on a predetermined schedule, when triggered by an internal or external event, or in response to requests from the network. Examples of a device include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. A device may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. In other scenarios, a device may represent a vehicle or other equipment that is capable of monitoring and/or reporting on its operational status or other functions associated with its operation.

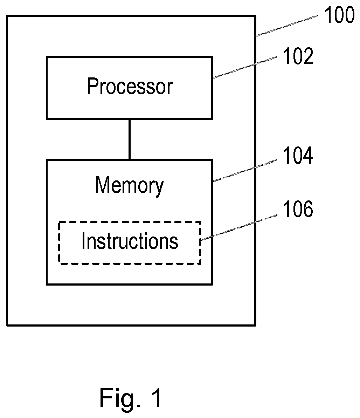

Turning now to Fig. 1, in some embodiments there is a device 100, comprising a processor 102 and a memory 104. In some embodiments, the memory 104 contains instructions executable by the processor 102, and the set of instructions, when executed by the processor, cause the processor to perform any of the methods described herein.

The device 100 may be configured or operative to perform the methods and functions described herein, such as the methods 200, or 300 as described below. The device 100 may comprise a processor (or logic) 102. It will be appreciated that a device 100 may comprise one or more virtual machines running different software and/or processes. The device 100 may therefore comprise one or more servers, switches and/or storage devices and/or may comprise cloud computing infrastructure or infrastructure configured to perform in a distributed manner, that runs the software and/or processes.

The processor 102 may control the operation of the device 100 in the manner described herein. The processor 102 can comprise one or more processors, processing units, multi-core processors or modules that are configured or programmed to control the device 100 in the manner described herein. In particular implementations, the processor 102 can comprise a plurality of software and/or hardware modules that are each configured to perform, or are for performing, individual or multiple steps of the functionality of the device 100 as described herein.

The device 100 may comprise a memory 104. In some embodiments, the memory 104 of the device 100 can be configured to store program code or instructions that can be executed by the processor 102 of the device 100 to perform the functionality described herein. Alternatively, or in addition, the memory 104 of the device 100, can be configured to store any requests, resources, information, data, signals, or similar that are described herein. The processor 102 of the device 100 may be configured to control the memory 104 of the device 100 to store any requests, resources, information, data, signals, or similar that are described herein.

It will be appreciated that the device 100 may comprise other components in addition or alternatively to those indicated in Fig. 1. For example, the device 100 may comprise a communications interface. The communications interface may be for use in communicating with other devices and/or nodes in the communications network. For example, the communications interface may be configured to transmit to and/or receive from nodes or network functions requests, resources, information, data, signals, or similar. The processor 102 of device 100 may be configured to control such a communications interface to transmit to and/or receive from nodes or network functions requests, resources, information, data, signals, or similar.

The device 100 may have other components that are not associated with the communications system. For example, a smart toaster may be configured with a heating element for toasting, a smart kettle may be configured with a heating element for boiling water, and a smart music player may be configured with speakers. The skilled person will appreciate that these are examples only and that devices have a wide range of functionality and associated components dependent on the purpose of the respective device.

The device 100 may be equipped with a reasoner component that contains relevant argumentation protocols and allows the devices to participate in the dialogue games described below.

Turning now to other embodiments, some embodiments herein relate to a first device and a second device. The first device may be a device such as any of the devices described above with respect to the device 100. In some examples, the first device may be an IoT device, operating in a smart environment such as a smart home.

The second device may be a device such as any of the devices described above with respect to the device 100. The second device may be the same type of device as the first device, or a different type of device to the first device. In some examples, the second device may be an IoT device, operating in the same smart environment as the first device.

The first device and the second device may operate in an IoT environment, otherwise known as a smart environment. Examples of smart environments include but are not limited to smart homes, smart offices and/or smart factories. The first device and the second device may operate in a common environment, for example, within a common geographic environment, or within the same smart environment. As such, actions performed by the first device may impact the second device (or goals of the second device).

Generally, the first device and the second device may be autonomous and independent from one another (and/or autonomous and independent from other devices operating in the environment). For example:

- Devices may have private goals (e.g. keep noise down, play music).
- Devices may be heterogenous and may have different sensing, acting and reasoning (about their goals and actions) abilities.
- Devices may not be able to share all the information available to them, due to e.g., privacy or transmission concerns, but only what they are permitted to or decide to; the information the devices operate with thus may be incomplete and the reasoning may often need to be distributed.
- Devices may not be able to execute complicated reasoning about other devices, but may be able to perceive and share information, as well as reason with knowledge of their own and that revealed by other devices.
- As edge or IoT devices are typically memory constrained, there may be container "twins" (e.g. digital twins) for individual device knowledge/reasoning to perform computations, whence the physical actuation can be communicated to the devices from their twins. This will be described in more detail below.

The first device and the second device may perform actions. Actions may comprise performing any functionality of the device. Examples of actions include, but are not limited to, boiling (e.g. by a kettle), playing music (e.g. by a radio or streaming device), switching on a lightbulb (e.g. by a smart light), switching on and/or setting the temperature of a cooking apparatus (e.g. in smart oven). The skilled person will appreciate that these are merely examples however and that the first device and the second device may perform other actions to those described herein.

Generally, there may be goals set for the environment. For example, collective goals for all of the devices in the environment, in addition or alternatively to goals for individual devices.

Goals may be heterogenous, including but not limited to:

- Persistent goals (e.g. acceptable noise levels, low power consumption),
- Planned goals/actions (e.g. listening to music at specific times),
- Spontaneous goals (e.g. boiling some water).

Goals and actions can be e.g., conflicting, complementary, or neutral from the user and/or device points of view.

In some embodiments (as described in more detail below) there may be a priority ordering over different types of goals. For example, it may be defined that spontaneous goals are preferred over planned ones, which are in turn preferred over persistent goals.

In embodiments herein, when the first device wants to (e.g. is instructed to) perform a first action, it may engage with the second device (and other devices, if applicable) in order to determine whether the first device can perform the first action, given the goals and/or other constrains on the first and second devices.

There may be various aims of communication and reasoning between the devices, including but not limited to

- Negotiation (devices fight for resources),
- Deliberation (devices reason on a common action),
- Persuasion (convince another device to do some action),
- Inquiry (ask intentions of other devices).

The first device and the second device may perform a dialogue game according to the argumentation protocol, as described above, in order to determine whether the first action can be performed by the first device. As noted above, the argumentation protocol is the procedural description (e.g. set of rules) by which agents are to communicate, and may describe, for example, what information to exchange, in what order, etc. A dialogue (game) is the object created during communication according to the argumentation protocol, e.g. a collection of utterances. As will be described in detail below, messages (e.g. utterances) sent as part of the dialogue game are modified herein so as to indicate a time interval in which the first device would like to perform the first action. Utterances made in response are also modified with time intervals indicating when the respective utterance is valid. This is used to ensure that decisions are made on information that is relevant to the time period in which the first device intends to perform the first action.

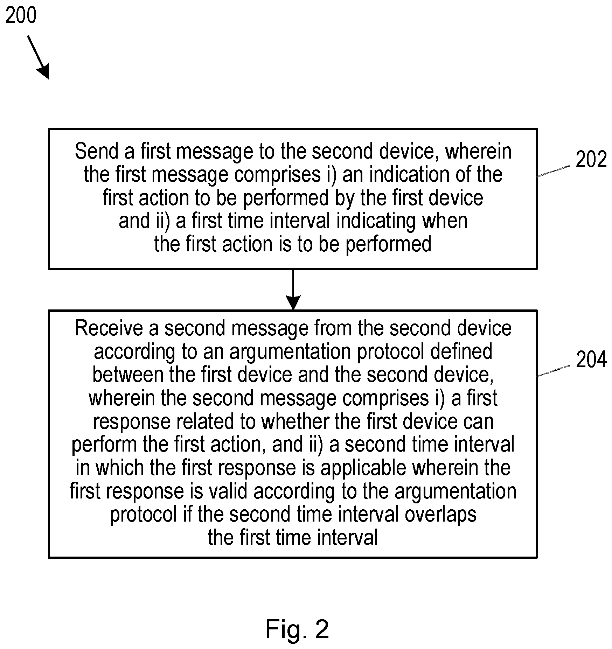

In more detail, turning now to Fig. 2, there is a computer implemented method 200 for determining, in coordination with a second device, whether a first device can perform a first action. Briefly, the method 200 comprises in a first step 202 sending a first message to the second device, wherein the first message comprises i) an indication of the first action to be performed by the first device and ii) a first time interval indicating when the first action is to be performed. In a second step 204 the method comprises receiving a second message from the second device according to an argumentation protocol defined between the first device and the second device, wherein the second message comprises i) a first response related to whether the first device can perform the first action, and ii) a second time interval in which the first response is applicable. The first response is valid according to the argumentation protocol if the second time interval overlaps the first time interval.

In some embodiments, the method 200 may be performed by the first device. In other embodiments, the method 200 may be performed by a digital twin of the first device. Digital twins are advantageous, if for example, the first device is memory limited.

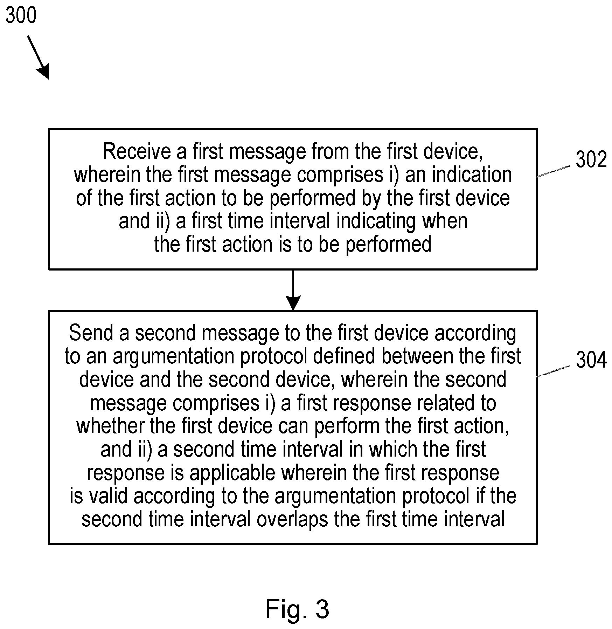

Fig. 3 shows a method 300 that may be performed in a complementary manner to the method 200 above. The method 300 is a computer implemented method for determining, in coordination with a first device, whether the first device can perform a first action. In a first step 302, the method comprises: receiving a first message from the first device, wherein the first message comprises i) an indication of the first action to be performed by the first device and ii) a first time interval indicating when the first action is to be performed. In a second step 304 the method further comprises sending a second message to the first device according to an argumentation protocol defined between the first device and the second device, wherein the second message comprises i) a first response related to whether the first device can perform the first action, and ii) a second time interval in which the first response is applicable. The first response is valid according to the argumentation protocol if the second time interval overlaps the first time interval.

In some embodiments, the method 300 may be performed by the second device. In other embodiments, the method 300 may be performed by a digital twin of the second device (for example, if the second device is memory limited).

The methods 200 and 300 may be performed in a complementary manner as a part of a dialogue game between the first device and the second device (or as part of a dialogue game between a first digital twin of the first device and a second digital twin of the second device.

In more detail, preceding the method 200, the first device may receive an instruction to perform the first action. For example, the instruction may be received from a user of the device. For example, if the first device is a kettle, then the first device may receive an instruction to boil. For example, the instruction may be received through the user pressing a button on the device, or remotely through e.g. an Application Programming Interface (API) for the device, or in any other manner.

If the method 200 is performed by a first digital twin of the first device, the first digital twin may perform the method 200 responsive to receiving an indication from the first device that the first device intends to perform the first action in the first time interval.

The first device (or digital twin thereof) may then perform step 202 of the method 200 and send a first message to the second device. The first message comprises i) an indication of the first action to be performed by the first device and ii) a first time interval indicating when the first action is to be performed.

The first message may be sent over the communications network as described above. The first message may be an utterance according to an argumentation protocol. In some embodiments, the first message is a first utterance and the first action is a main claim admitted by the first utterance. In this sense a main claim is a statement that starts a new dialogue according to an argumentation protocol.

In embodiments herein utterances are augmented with time intervals that express when the utterance is valid. Given a definition of an utterance as above, an utterance may generally be defined as a tuple: $\langle a_i, a_j, T, C, ID, int \rangle$ with the elements as above and int=(t1,t2) an interval (in some timeline) with timepoint t1 preceding timepoint t2. It is noted that intervals can take any standard form of intervals on the real line, e.g. int=[t1,t2).

Utterances may further be generalised by defining an utterance as a tuple

$$\langle a_i, a_j, T, C, ID, S \rangle$$

where $S = int_1 \cup ... \cup int_n$ is a set of $n \geq 1$ intervals in some timeline (e.g. the real line). Such utterances may be referred to as time-carrying utterances. For example, if the first device is a Kettle, then the kettle can send a first message (e.g. first utterance) to a Noise Controller (or noise control module) of the format:
< *Kettle, Noise Control, 0, claim(Boil)*, 1, [16: 05, 16: 08] > representing the intention to boil water during time from 16:05 to 16:08.

Thus, generally, the first message may comprise a tuple of the form:

$$\langle a_i, a_j, T, C, ID, S \rangle;$$

wherein $a_i$, is an identifier for the first device, $a_j$ is an identifier for the second device, T is an target identification number, ID is an integer identification number for the first message, C comprises the indication of the first action to be performed by the first device, and S is the first time interval. As noted above, S may be in the form of an interval, S=(t1,t2), where the first action is to be performed between the times t1 and t2.

It is noted that, as is the custom in dialogue games, the target T refers to the ID of a previous message to which the current utterance relates to. The first message starts a new chain of utterances and has T=0 (and ID=1) by convention. Subsequent responses and other messages made in reply to the first message will have T'=ID of the first message. As such, in step 202 the first message may have T set to 0.

It is noted that generally, messages made in reply to a particular previous message may have T' set the ID of the particular previous message. For example, a third message may have T=2, referring to the very previous message with ID=2. Other messages may have T values anywhere in between 1 and the ID of the most recently sent message in the dialogue.

The first message may be sent directly to the second device or a digital twin of the second device. In other examples, the first message may be broadcast, e.g. to which ever device(s) are listening.

After sending the first message, the first device may update a set of commitments, C, made by the first device. The first device may update the set of commitments to incorporate the first action, C, and the first time interval, S according to <C,S> $\in \mathcal{C}$.

Thus herein, an utterance-to-timed-commitments mapping is defined as a function $f$ that maps the content C of an utterance $u$ into a commitment <C,S> $\in$ C where $S$ is the set of intervals carried by $u$ and $\mathcal{C}$ is the set of all the current commitments of the device. For instance, the initial commitments $\mathcal{C}_K$ of agent Kettle may be empty ø, but after the user demands boiled water, the kettle emits utterance < *Kettle, Noise Control, 0, claim(Boil)*, 1, [16: 05, 16: 08] > and its content *claim(Boil)* is mapped into a commitment $\langle$*claim(Boil)*, [16: 05, 16: 08]$\rangle$ so that $\mathcal{C}_K$ = { $\langle$*claim(Boil)*, [16: 05, 16: 08]$\rangle$ }.

In step 302 of the method 300 the first message, as described above, is received (either by the second device or by a digital twin of the second device) from the first device (or digital twin thereof).

The first message (or first utterance) is assessed by the entity or agent receiving the first message (which may be the second device or second digital twin of the second device) according to an argumentation protocol defined between the first device and the second device.

Any type of argumentation protocol may be used, that can be modified to take time-carrying utterances as described herein into consideration. For example the argumentation protocol may be as described in the paper by H. Prakken (full citation given above); or as described in the paper by X. Fan and F. Toni (full citation given above); or as described in the paper by E. Lovellette, H. Hexmoor, and K. Rodriguez (full citation given above).

Generally, the first and second devices (or their digital twins) internally possess individual argument construction and evaluation mechanisms containing components such as:

- a knowledge-base and reasoning mechanism, including formal language (e.g. $\mathcal{L}$ as defined above), logic (e.g. rules of the form $\beta_0 \leftarrow \beta_1, \dots, \beta_m$).

- argumentation protocol implementation, such as standard communication rules.

The agents exchange utterances according to a well-defined protocol of the game. The protocol specifies the rules of information exchange, such as concerning

- the kinds of allowed utterances (e.g., claims, supporting claims, questions, concessions, counterclaims),
- the legal moves of agents (e.g. which kinds of utterances are allowed, how many utterances at once),
- termination and outcomes of the dialogue game, specifically
- upon which conditions the dialogue terminates, e.g., all agents conceding and thus consecutively putting forward pass $\pi$ utterances;
- and the collectively "accepted" contents (carried by the utterances in the dialogue) upon termination.

As envisaged by some known argumentation strategies, if the first action intended by the first device initiating the dialogue is compatible with the second device's commitments, then the latter agent agrees with it (i.e. concedes the contents of utterances); else, it starts arguing (i.e. question or challenge the utterances).

In embodiments herein, the argumentation protocol takes into account (e.g. considers) that the first message (first utterance) is time carrying. Which may mean that for an utterance $u = < a_i, a_j, T, C, ID, S >$, the utterance $u' = < a_j, a_i, T' = ID, C', ID', S' >$ whose target $T'$ is the identifier $ID$ of $u$, is such that the intervals $S'$ are in an appropriate relationship with the intervals $S$ of $u$. The appropriate relationships would be specified for the legal moves of agents, for instance that with contents $C = asm(\alpha)$ of $u$ and $C' = contr(\alpha, \beta)$ of $u'$, and interval $S = (a, b)$ of $u$, it must be that $S' = (c, d)$ satisfies $a < c < b < d$. A pseudo-code extension of a given argumentation protocol may include the following extension of an existing legal move function:

Input $u = < a_i, a_j, T, C, ID, S >$ : utterance, $u' = < a_j, a_i, T' = ID, C', ID', S' >$ : potential utterance

Output True/False [indicates whether a potential utterance is legal to put forward in the dialogue]

Extends Function Legal-Move [legal move function for standard, non-time-carrying protocol]

Function Legal-Move-Time($u, u'$)

    If Legal-Move($< a_i, a_j, T, C, ID >, < a_j, a_i, T', C', ID' >$) True

        If $S'$ overlaps $S$ OR $S'$ during $S$ OR $S$ during $S'$ OR $S$ equals $S'$

            Return True

The relations - such as overlaps, during, equals - between time intervals of the utterances can be straightforwardly implemented by various means, e.g. using the well-known Allen's time interval logic.

In other words, in some embodiments, the second time interval overlaps the first time interval if the first time interval and the second time interval satisfy any one of the: starts; ends; overlaps; during; or equals criteria of Allen's time interval logic.

For example, suppose an existing argumentation protocol is extended so that agent $a_i$ has uttered an assumption

$\alpha \in \mathcal{L}$ for time interval ($a, b$) and agent $a_j$ has uttered a contrary $\beta \in \mathcal{L}$ of $\alpha$ for time interval ($c, d$). If the interval ($a, b$) overlaps ($c, d$) and $d$ precedes the termination time $t$, then $a_i$ was not able to argue about $ctr(\alpha, \beta)$ and $asm(\alpha)$ will not be accepted. (The idea here is that $a_j$ contradicted $a_i$'s assumption $\alpha$ while it was still valid (interval overlap) and $a_i$ failed to react to this contradiction $\beta$ while it was still possible to (the termination time $t$ is passed $d$)). The difference from the existing argumentation protocol is that the intervals carried by utterances have to be checked for the legality of moves, namely that ($a, b$) overlaps ($c, d$) as in Allen's time interval logic.

Turning back to the method 300, in step 304 a second message is sent to the first device according to the argumentation protocol defined between the first device and the second device. The second message comprises i) a first response related to whether the first device can perform the first action, and ii) a second time interval in which the first response is applicable. The first response is valid according to the argumentation protocol if the second time interval overlaps the first time interval.

In some embodiments, the second message is a second utterance, and the first response is a claim admitted by the second utterance. In this sense a claim is a response (e.g. information) related to the main claim of the first message as described above. The claim in the second message may be of various different types, for example, a question, counterclaim, or supporting-claim. The skilled person will be familiar with claims, questions, counterclaims, supporting claims and other types of claims as defined in argumentation protocols.

The second message may comprise a tuple of the form: $\langle a_i, a_j, T, C, ID, S \rangle$ where $a_i$, is an identifier for the second device, $a_j$ is an identifier for the first device, T is a target identification number, ID is an identification number for the second message, C comprises the first response, and S is the second time interval.

As the second message is a response to the first message described above, the target T, will be set to the ID of the first message. S is in the form of an interval, S=(t3,t4) and wherein the first response is applicable between the times t3 and t4.

In some examples, the first response (e.g. counterclaim) in the second message identifies a conflict between performance of the first action by the first device and a first goal and wherein the first time interval is further used to resolve the conflict based on a priority of the first action compared to the first goal during the first time interval. For example, the conflict may be resolved based on the relative priorities of the first action and the first goal (e.g., whether it is more important to perform the first action or meet the first goal). As an example, a first goal may be to keep noise below a noise threshold, and the first action may be for a kettle to boil (creating noise above the noise threshold). In such an example, boiling the kettle (as a spontaneous goal) may take priority over keeping noise below the noise threshold.

In some embodiments, the first response in the second message identifies that performance of the first action by the first device in the first time interval and performance of a second action by the second device in the second time interval, leads to a conflict with respect to a first goal. For example, a first action of boiling a kettle by a first kettle device whilst simultaneously a second music player device performs a second action of playing music might lead to conflict with a first goal of keeping noise less than a noise threshold.

In this scenario, the length of the first time interval and the length of the second time interval may be used to determine a priority of the first action with respect to the second action and thus resolve the conflict.

For example, as described above, goals may be categorised into different levels, based on duration. An example scheme may categorise goals as being

-    Persistent goals (e.g., to keep noise levels below an acceptable noise level threshold, or keep power consumption below a power consumption threshold) - such goals may have e.g., time intervals longer than a day.
-    Planned goals/actions (e.g. listening to music at specific times) - such goals may have e.g. time intervals that are longer in duration than an hour but less than a day in length.
-    Spontaneous goals (e.g. boiling some water) - these goals may be of less than an hour in length.

There may be a priority ordering over different types of goals. For example, it may be defined that spontaneous goals are preferred over planned ones, which are in turn preferred over persistent goals.

The skilled person will appreciate that the above scheme is merely an example however, and that different categories could be defined to those above, for example, with different numbers of categories, and/or where each category is defined by thresholds of different lengths.

In some embodiments, the first goal is associated with the first device and performance of the second action is associated with a second goal for the second device. In this scenario, a relative priority of the first goal compared to the second goal may be used to determine a priority of the first action with respect to the second action and thus resolve the conflict.

Thus, where needed conflicts be resolved using preferences induced by the priorities over goals: intuitively, if an action $A$ leads to achieving a goal $g$ that is of higher priority than the goal $g'$ which action $A'$ leads to achieving, then $A$ is preferred over $A'$. For instance, the action of boiling water to achieve the spontaneous goal of having boiled water is preferred over the action of playing music which achieves the planned goal of listening to music.

Formally, goals may be stratified into sets $G_1, \ldots, G_n$ such that each goal in $G_{i+1}$ is preferred over any goal in $G_i$: $\forall g' \in G_i, g \in G_{i+1}\ g' < g$ and $<$ is a transitive relation. Otherwise, for any two goals in the same set $G_i$, we say that they are incomparable wrt $<$ and thus of equal priority.

A given argumentation protocol may be modified so that whenever two utterances $u$ and $u'$ with contents associated to goals $g$ and $g'$ are in conflict according to the

argumentation protocol, the preference $g < g'$ dictates that the agent uttering $u$ has to concede the content in $u'$.

This can be encoded by modifying the functions for determining an agent's next utterance, with priorities available globally (to all agents).

A pseudo-code extension of a given argumentation protocol may be given as follows:

**Input** $u =\ <a_i, a_j, T, C, ID, S>$ : utterance, $u' =\ <a_j, a_i, T' = ID, C', ID', S'>$ : last utterance
**Output** $u^* =\ <a_i, a_j, T^*, C^*, ID^*, S^*>$ : utterance
**Extends Function** Next-Utterance [utterance generation function for standard, non-time-carrying protocol]
**Assumes Functions** Associate-Content-Goal, Next-ID, Retract-Content [from the given argumentation protocol], **Object** $(G, <)$ [global goals and priorities]

**Function** Next-Utterance-Goals($u$, $u'$)
    **If** Associate-Content-Goal($u$) == $g$ AND Associate-Content-Goal($u'$) == $g'$
        **If** $g, g' \in G$ AND $g < g'$
            $T^* = ID$
            $ID^*$ = Next-ID($ID'$)
            $S^* = S$
            $T^* = ID$
            $C^*$ = Retract-Content($C$)
            $u^* =\ <a_i, a_j, T^*, C^*, ID^*, S^*>$
            **Return** $u^*$

For illustration, suppose a goal g is associated to a timed commitment of agent $a_i$ and we have utterances $u_2 =<a_i, a_j, T_1, claim(g), T_2, (a, b)>$ and $u_4 =<a_i, a_j, T_3, asm(g), T_4, (a, b)>$. Suppose further a conflict arises with the following utterances: $u_5 =<a_j, a_i, T_4, contr(g, g'), T_5, (c, d)>$ and $u_6 =<a_j, a_i, T_5, asm(g'), T_6, (c, d)>$, where $a < b < c < d$ and $g'$ is a goal such that $g < g'$. (Essentially, the two agents put forward contradictory assumptions based on their goals.) Then the legal moves stipulate that $a_i$ has to retract its claim g and concede $g'$ instead.

Turning back to the methods 200 and 300, the second message sent by the second device as described above is then received by the first device (or agent of the first device) in step 204.

Dependent on the content of the first response by the second device, the method 200 may then comprise exchanging subsequent messages with the second device according to the argumentation protocol, wherein each subsequent message comprises i) a subsequent response related to the first action, and ii) a corresponding subsequent time interval in which said response is applicable. As above, each subsequent response is valid according to the argumentation protocol if the corresponding subsequent time interval overlaps the first time interval.

For example, the first device may send a third message to the second device in response to the second message from the second device. And the second device may respond once again according to the argumentation protocol as described above until a consensus is reached.

If the second device agrees that the first device may perform the action, then the method 200 may further comprise receiving an agreement from the second device that the first device may perform the first action in the first time interval, and initiating performance of the first action in the first time interval. For example, if the method 200 is performed by the first device, then the first device may perform the first action. If the method 200 is performed by a digital twin of the first device, then the digital twin may send an instruction to the first device to trigger or cause the first device to perform the first action.

During the dialogue, the set $C_i$ of an agent's $a_i$ commitments is updated using the utterance-to-timed-commitments mapping $f$ that maps the content C of an utterance u into a commitment to $<C,S> \in C$, as described above. When the dialogue has terminated (e.g. according to existing Argumentation protocols and termination rules), $C_i$ is updated by:

- removing every commitment <C,S> which corresponds to the content $C$ (of an utterance) that is *not accepted* among the outcomes of the dialogue;
- adding every commitment <C,S> which corresponds to the content $C$ (of an utterance) that *is accepted* among the outcomes of the dialogue.

For instance, suppose utterances (among others)

< *Kettle, Noise Control,* 0, *claim*(*Boil*), 1, [16: 05, 16: 08] >,
< *Kettle, Noise Control,* 2, *asm*(*Boil*), 3, [16: 05, 16: 08] >,
< *Noise Control, Kettle,* 3, *contr(Boil),* 4, [16: 00, 18: 00] > and that the outcome of the dialogue includes *asm*(*Boil*) and *contr*(*Boil*) but not *claim*(*Boil*). Then ⟨*claim*(*Boil*), [16: 05, 16: 08]⟩ will be removed, and ⟨*asm*(*Boil*), [16: 05, 16: 08]⟩, ⟨*contr*(*Boil*), [16: 00, 18: 00]⟩ added to agent's Kettle commitments.

Agents' initial commitments are effectively induced by the goals (set by the user of the devices), such as *claim*(*Boil*). In dialogue games, agents express their intents to take actions to achieve goals (i.e. an agent's argumentation strategy is determined by the [initial] commitments).

Thus, using the methods 200 and 300 a first device and a second device can determine whether the first device can perform a first action in a collaborative manner. It will be appreciated that the methods 200 and 300 can be generalized to dialogue games according to an argumentation protocol between any number of devices, where the utterances between the devices are time stamped using intervals in the manner described above.

Turning now to another embodiment, as described above, the methods 200 and 300 may be performed using digital twins. For example, in some embodiments there is a method in a computing system comprising a digital twin of a first device and a digital twin of a second device, wherein the method is for determining, in coordination with the digital twin of the second device, whether the first device can perform a first action. The method comprises: the digital twin of the first device sending a first message to the digital twin of the second device, wherein the first message comprises i) an indication of the first action to be performed by the first device and ii) a first time interval indicating when the first action is to be performed; and the digital twin of the second device, responsive to receiving the first message, sending a second message to the digital twin of the first device according to an argumentation protocol defined between the first device and the second device, wherein the second message comprises i) a first response related to whether the first device can perform the first action, and ii) a second time interval in which the first response is applicable. The first response is valid according to the argumentation protocol if the second time interval overlaps the first time interval.

The first message and the second message were described in detail above and the detail therein will also be understood to apply equally to an embodiment where both the first and second devices are represented by digital twins.

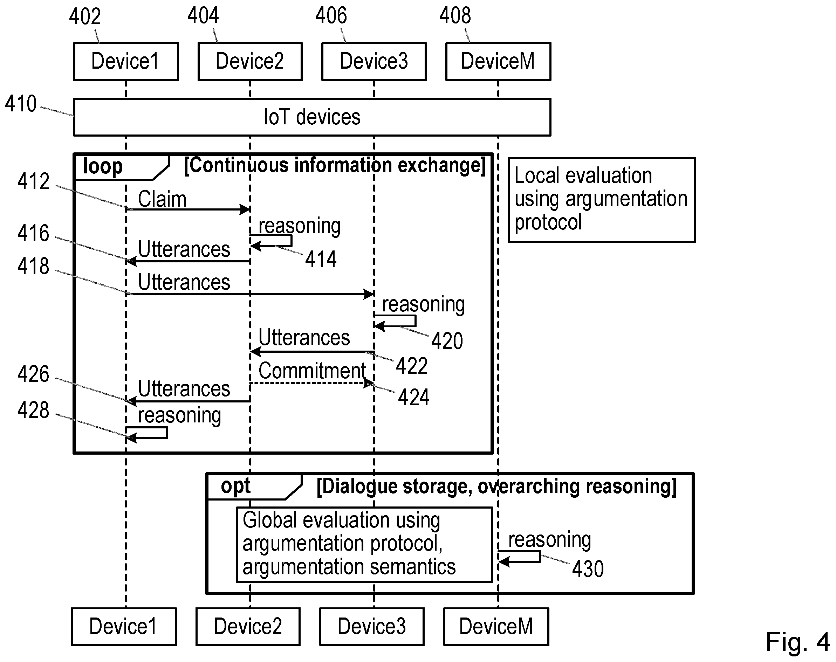

Turning now to Fig. 4, which illustrates a signal diagram for performing the methods 200 and 300. In this example, there is a plurality of IoT devices 410 including a first device 402, a second device 404, a third device 406 and a fourth device 408.

The first device performs step 202 of the method 200 and in step 412 sends a first message to the second device 404. The first message 412 comprises i) an indication of the first action to be performed by the first device and ii) a first time interval indicating when the first action is to be performed.

The second device 404 receives the first message (as in step 302 described above) and evaluates the first action according to the argumentation protocol in step 414. It then performs step 304 of the method 300 and in step 416 sends a second message to the first device containing a first response, as described above.

The first device 402 then exchanges subsequent messages 418, 422, 426, with the second device 404 and the third device 406 until a consensus is reached as to whether the first device can perform the first action.

In this example, the fourth device 408 may perform 430 global evaluation using the argumentation protocol and argumentation semantics.

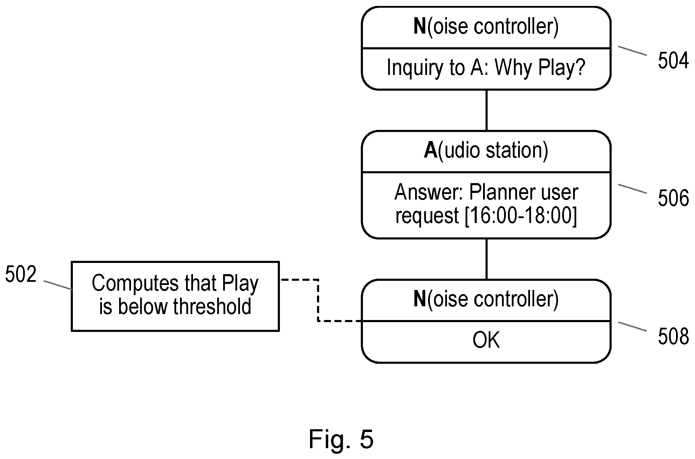

Turning now to Fig. 5, there is an example enquiry dialogue between a first device "audio station" and a second device "noise control" according to an argumentation protocol defined between the noise controller and the audio station device. In this example, the first device audio station sends a first message (not shown in Fig, 5) comprising an indication that the audio station intends to play music in a first interval between [1600:1800]. In response, the second device (noise controller) sends a second message 504 comprising a first response containing an enquiry of why the audio station intends to play the music. In a subsequent message 506, the audio station responds that the first action (play music) is a planned user request for the time interval [1600:1800]. According to the argumentation protocol, the noise controller determines that this is below the noise control threshold in 502 and send an acceptance message to the audio station in step 508.

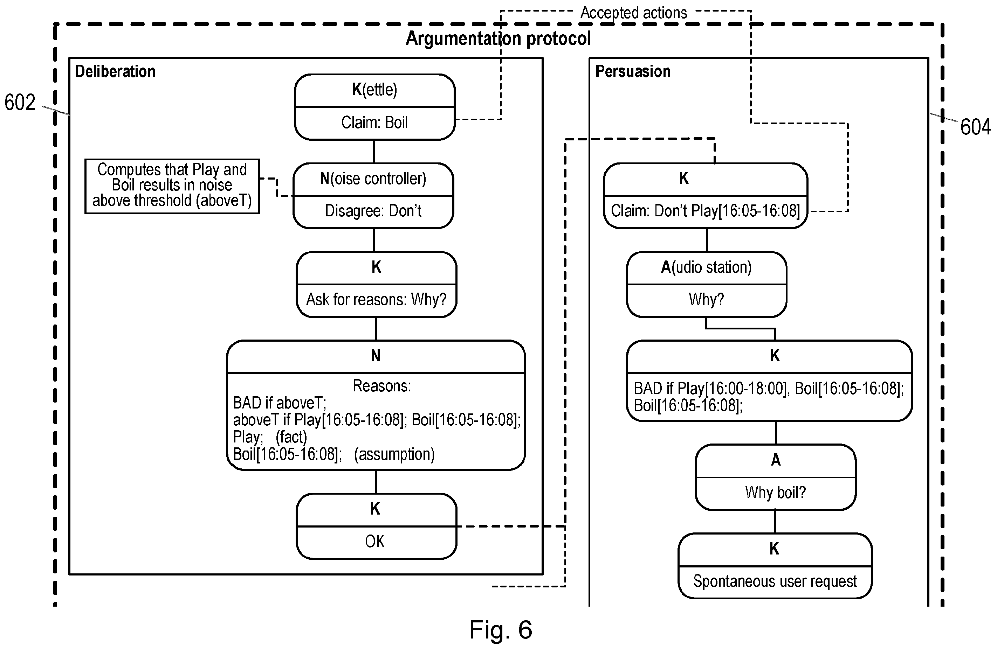

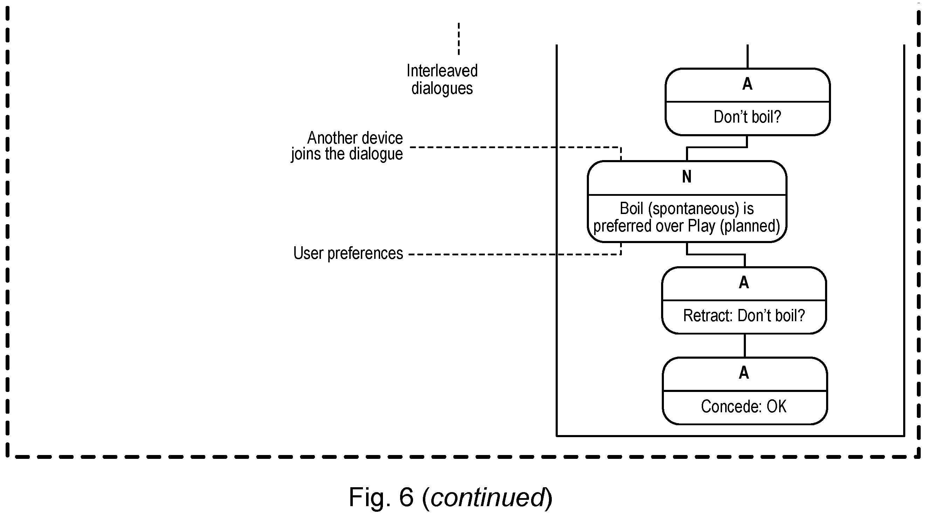

Fig. 6 illustrates the method 200 and 300 played out between three devices, a kettle, a noise controller, and an audio station that have different sensing and actuation abilities and need to communicate and converge to meeting three heterogenous goals.

In this embodiment, the following goals are defined:

Persistent goal: **noise controller** - ambient atmosphere, noise level below threshold

Planned goal: **audio station -** listening to music

Spontaneous goal: **kettle** - boil water

The dialogue between the three devices may be summarized as follows: user requests for boiled water. A combination of deliberation 602 and persuasion 604 takes place, whereby Kettle (K) and N deliberate on K boiling water, during which K and N collectively persuade A to stop playing while K boils.
The dialogues unfold roughly as follows.

1. The Kettle agent K starts a dialogue by putting forward the first utterance to the Noise controller agent N with the intention (claim) to boil at time 16:05-16:08:

$$< K, N, 0, claim(Boil), 1, [16:05, 16:08] >$$

2. K also states that intention is an assumption (i.e. it does not follow from any facts or statements, and is something to argue about/establish acceptance of):

$$< K, N, 1, asm(Boil), 2, [16:05, 16:08] >$$

3. N uses its internal knowledge and reasoning mechanism to determine that the audio station is planned to play music simultaneously at the intended boiling time, and that together these two actions will result in noise above the desired threshold. N's strategy is to disagree with K's intention and it thus moves an utterance for the contrary of boiling:

$$< N, K, 2, contr(Boil, \neg Boil), 3, [16:05, 16:08] >$$

4. K can and does inquire about the reasons for N's contra-claim:

$$< K, N, 3, why(\neg Boil), 4, [16:05, 16:08] >$$

5. N reveals internal computations by moving some of its knowledge as a rule that says that playing music leads to non-boiling, and an assumption about the planned playing of music:

$$< N, K, 4, rl(\neg Boil \leftarrow Play), 5, [16:05, 16:08] >, < N, K, 5, asm(Play), 6, [16:00, 18:00] >$$

6. K concedes and initiates a parallel dialogue with A by trying to convince the latter not to play at the time when K intends to boil:

$$< K, A, 0, claim(\neg Play), 1, [16:05, 16:08] >$$

7. The dialogue unfolds similarly to the previous one, with *Boil* and *Play* declared as goals
8. Since global priority *Play* $<$ *Boil* over goals is available, A retracts *claim*(¬*Boil*) and concedes
9. The dialogues terminate and the outcomes include ¬*Play*([16:05, 16:08]) and *Boil*([16:05, 16:08]).

The devices thus collectively arrive at a set of actions satisfactory to all.
In summary, the methods herein achieve the following:

- Argumentation protocol implementation in devices or their digital twins (as opposed to proposals of using general argumentation methodologies for agent interaction).
- Using formal utterance-to-timed-commitments mappings and prioritized goals in dialogue games among agents/-devices (in contrast to state-of-the-art: ignoring any time aspects; not taking into account the device user's priorities over goals).

- Collective loT device decision making, not limited to negotiation, but including inquiry, deliberation, persuasion, and combinations thereof.
- Agent communication and reasoning via argumentation protocols without revealing sensitive, reserved, or unnecessary information.

In another embodiment, there is provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope. The invention is set out in the appended claims.

**Claims**

1. A computer implemented method performed by a first device for determining, in coordination with a second device, whether the first device can perform a first action, the method comprising:

   sending (202) a first message to the second device, wherein the first message comprises an indication of the first action to be performed by the first device, and a first time interval indicating when the first action is to be performed; and

   receiving (204) a second message from the second device according to an argumentation protocol defined between the first device and the second device, wherein the second message comprises a first response related to whether the first device can perform the first action, and a second time interval in which the first response is applicable; and

   wherein the first response is valid according to the argumentation protocol if the second time interval overlaps the first time interval;

   and the method being **characterized by**:

   exchanging subsequent messages with the second device according to the argumentation protocol, wherein each subsequent message comprises a subsequent response related to the first action, and a corresponding subsequent time interval in which said response is applicable; and

wherein each subsequent response is valid according to the argumentation protocol if the corresponding subsequent time interval overlaps the first time interval; wherein the first message comprises a tuple of the form

$$\langle a_i, a_j, T, C, ID, S \rangle,$$

wherein $a_i$, is an identifier for the first device, $a_j$ is an identifier for the second device, T is a target identification number, ID is an identification number for the first message, C comprises the indication of the first action to be performed by the first device, and S is the first time interval.

2. A method as in claim 1 wherein S is in the form of an interval, S=(t1, t2) and wherein the first action is to be performed between the times t1 and t2.

3. A method as in any one of the preceding claims wherein the first response in the second message identifies a conflict between performance of the first action by the first device and a first goal and wherein the first time interval is further used to resolve the conflict based on a priority of the first action compared to the first goal during the first time interval.

4. A method as in any one of claims 1 to 3 wherein the first response in the second message identifies that performance of the first action by the first device in the first time interval and performance of a second action by the second device in the second time interval, leads to a conflict with respect to a first goal; and
wherein the length of the first time interval and the length of the second time interval are used to determine a priority of the first action with respect to the second action and thus resolve the conflict.

5. A method as in claim 4 wherein the first goal is associated with the first device and wherein performance of the second action is associated with a second goal for the second device; and
wherein a relative priority of the first goal compared to the second goal is used to determine a priority of the first action with respect to the second action and thus resolve the conflict.

6. A method as in any one of the preceding claims, wherein the step of sending (202) the first message further comprises: updating a set of commitments, $\mathcal{C}$, made by the first device with the first action, C , and the first time interval, S according to $<C,S> \in \mathcal{C}$.

7. A method as in any one of the preceding claims further comprising:

   receiving an agreement from the second device that the first device may perform the first action in the first time interval; and
   initiating performance of the first action in the first time interval.

8. A computer implemented method performed by a second device for determining, in coordination with a first device, whether the first device can perform a first action, the method comprising:

   receiving (302) a first message from the first device, wherein the first message comprises an indication of the first action to be performed by the first device, and a first time interval indicating when the first action is to be performed; and
   sending (304) a second message to the first device according to an argumentation protocol defined between the first device and the second device, wherein the second message comprises a first response related to whether the first device can perform the first action, and a second time interval in which the first response is applicable; and
   wherein the first response is valid according to the argumentation protocol if the second time interval overlaps the first time interval;
   and the method being **characterized by**:

      exchanging subsequent messages with the first device according to the argumentation protocol, wherein each subsequent message comprises a subsequent response related to the first action, and a corresponding subsequent time interval in which said response is valid; and
      wherein each subsequent response is valid according to the argumentation protocol if the corresponding subsequent time interval overlaps the first time interval; wherein the second message comprises a tuple of the form

$$\langle a_i, a_j, T, C, ID, S \rangle,$$

wherein $a_i$, is an identifier for the second device, $a_j$ is an identifier for the first device, T is a target identification number, ID is an identification number for the second message, C comprises the first response, and S is the second time interval.

9. A method as in claim 8 wherein S is in the form of an interval, S=(t3, t4) and wherein the first response is applicable between the times t3 and t4.

10. A method as in any one of claims 8 to 9 wherein the first response in the second message identifies a conflict between performance of the first action by the first device and a first goal and wherein the first time interval is further used to resolve the conflict based on a priority of the first action compared to the first goal during the first time interval.

11. A method as in any one of claims 8 to 9 wherein the first response in the second message identifies that performance of the first action by the first device in the first time interval and performance of a second action by the second device in the second time interval, leads to a conflict with respect to a first goal; and
wherein the length of the first time interval and the length of the second time interval are used to determine a priority of the first action with respect to the second action and thus resolve the conflict.

12. A method as in claim 11 wherein the first goal is associated with the first device and wherein performance of the second action is associated with a second goal for the second device; and
wherein a relative priority of the first goal compared to the second goal is used to determine a priority of the first action with respect to the second action and thus resolve the conflict.

13. A method as in any one of the preceding claims wherein the second time interval overlaps the first time interval if the first time interval and the second time interval satisfy any one of the:

starts;
ends;
overlaps;
during; or
equals

criteria of Allen's time interval logic.

14. A first device (100) configured for determining, in coordination with a second device, whether a first device can perform a first action, wherein the first device is configured to:

send a first message to the second device, wherein the first message comprises an indication of the first action to be performed by the first device, and a first time interval indicating when the first action is to be performed; and
receive a second message from the second device according to an argumentation protocol defined between the first device and the second device, wherein the second message comprises a first response related to whether the first device can perform the first action, and a second time interval in which the first response is applicable; and
wherein the first response is valid according to the argumentation protocol if the second time interval overlaps the first time interval;
and the first device (100) is **characterized by** being configure to:

exchange subsequent messages with the second device according to the argumentation protocol, wherein each subsequent message comprises a subsequent response related to the first action, and a corresponding subsequent time interval in which said response is applicable; and
wherein each subsequent response is valid according to the argumentation protocol if the corresponding subsequent time interval overlaps the first time interval; wherein the first message comprises a tuple of the form

$$\langle a_i, a_j, T, C, ID, S \rangle,$$

wherein $a_i$, is an identifier for the first device, $a_j$ is an identifier for the second device, T is a target identification number, ID is an identification number for the first message, C comprises the indication of the first action to be performed by the first device, and S is the first time interval.

**15.** A first device as in claim 14 configured to perform the method of any one of claims 2 to 7.

**16.** A second device (100) configured for determining, in coordination with a first device, whether the first device can perform a first action, wherein the second device is configured to:

receive a first message from the first device, wherein the first message comprises an indication of the first action to be performed by the first device and a first time interval indicating when the first action is to be performed; and
send a second message to the first device according to an argumentation protocol defined between the first device and the second device, wherein the second message comprises a first response related to whether the first device can perform the first action, and a second time interval in which the first response is applicable; and
wherein the first response is valid according to the argumentation protocol if the second time interval overlaps the first time interval; and
the second device (100) **characterized by** being configured to:
exchange subsequent messages with the first device according to the argumentation protocol, wherein each subsequent message comprises a subsequent response related to the first action, and a corresponding subsequent time interval in which said response is valid; and
wherein each subsequent response is valid according to the argumentation protocol if the corresponding subsequent time interval overlaps the first time interval;
wherein the second message comprises a tuple of the form

$$\langle a_i, a_j, T, C, ID, S \rangle,$$

wherein $a_i$, is an identifier for the second device, $a_j$ is an identifier for the first device, T is a target identification number, ID is an identification number for the second message, C comprises the first response, and S is the second time interval.

**17.** A second device as in claim 16 configured to perform the method of any one of claims 8 to 12.

**Patentansprüche**

**1.** Computerimplementiertes Verfahren, das von einer ersten Vorrichtung durchgeführt wird, um in Koordination mit einer zweiten Vorrichtung zu bestimmen, ob die erste Vorrichtung eine erste Aktion ausführen kann, wobei das Verfahren Folgendes umfasst:

Senden (202) einer ersten Nachricht an die zweite Vorrichtung, wobei die erste Nachricht eine Angabe der ersten Aktion, die von der ersten Vorrichtung ausgeführt werden soll, und ein erstes Zeitintervall umfasst, das angibt, wann die erste Aktion ausgeführt werden soll; und
Empfangen (204) einer zweiten Nachricht von der zweiten Vorrichtung gemäß einem Argumentationsprotokoll, das zwischen der ersten Vorrichtung und der zweiten Vorrichtung definiert ist, wobei die zweite Nachricht eine erste Antwort im Hinblick darauf, ob die erste Vorrichtung die erste Aktion ausführen kann, und ein zweites Zeitintervall umfasst, in dem die erste Antwort gilt; und
wobei die erste Antwort gemäß dem Argumentationsprotokoll gültig ist, falls das zweite Zeitintervall das erste Zeitintervall überlappt;
und das Verfahren durch Folgendes gekennzeichnet ist:

Austauschen von nachfolgenden Nachrichten mit der zweiten Vorrichtung gemäß dem Argumentationsprotokoll, wobei jede nachfolgende Nachricht eine nachfolgende Antwort in Bezug auf die erste Aktion und ein entsprechendes nachfolgendes Zeitintervall umfasst, in dem die Antwort gilt; und
wobei jede nachfolgende Antwort gemäß dem Argumentationsprotokoll gültig ist, falls das entsprechende nachfolgende Zeitprotokoll das erste Zeitintervall überlappt; wobei die erste Nachricht ein Tupel der folgenden Form umfasst:

$$(a_i, a_j, T, C, ID, S),$$

wobei $a_i$ eine Kennung für die erste Vorrichtung ist, $a_j$ eine Kennung für die zweite Vorrichtung ist, T eine Zielidentifikationsnummer ist, ID eine Identifikationsnummer für die erste Nachricht ist, C die Angabe der ersten von der ersten Vorrichtung auszuführenden Aktion umfasst und S das erste Zeitintervall ist.

2. Verfahren nach Anspruch 1, wobei S in der Form eines Intervalls S = (t1, t2) ist und wobei die erste Aktion zwischen den Zeitpunkten t1 und t2 ausgeführt werden soll.

3. Verfahren nach einem der vorhergehenden Ansprüche, wobei die erste Antwort in der zweiten Nachricht einen Konflikt zwischen der Ausführung der ersten Aktion durch die erste Vorrichtung und einem ersten Ziel identifiziert und wobei das erste Intervall ferner verwendet wird, um den Konflikt basierend auf einer Priorität der ersten Aktion gegenüber dem ersten Ziel während des ersten Zeitintervalls zu lösen.

4. Verfahren nach einem der Ansprüche 1 bis 3, wobei die erste Antwort in der zweiten Nachricht identifiziert, dass die Ausführung der ersten Aktion durch die erste Vorrichtung in dem ersten Zeitintervall und die Ausführung einer zweiten Aktion durch die zweite Vorrichtung in dem zweiten Zeitintervall zu einem Konflikt in Bezug auf das erste Ziel führt; und wobei die Länge des ersten Zeitintervalls und die Länge des zweiten Zeitintervalls verwendet werden, um eine Priorität der ersten Aktion in Bezug auf die zweite Aktion zu bestimmen und dadurch den Konflikt zu lösen.

5. Verfahren nach Anspruch 4, wobei das erste Ziel mit der ersten Vorrichtung assoziiert ist und wobei die Ausführung der zweiten Aktion mit einem zweiten Ziel für die zweite Vorrichtung assoziiert ist; und wobei eine relative Priorität des ersten Ziels gegenüber dem zweiten Ziel verwendet wird, um eine Priorität der ersten Aktion in Bezug auf die zweite Aktion zu bestimmen und dadurch den Konflikt zu lösen.

6. Verfahren nach einem der vorhergehenden Ansprüche, wobei der Schritt des Sendens (202) der ersten Nachricht ferner Folgendes umfasst:

Aktualisieren eines Satzes von Commitments $\mathcal{C}$, die von der ersten Vorrichtung mit der ersten Aktion C und dem ersten Intervall S gemäß <C, S> $\in \mathcal{C}$ eingegangen wurden.

7. Verfahren nach einem der vorhergehenden Ansprüche, ferner umfassend:

Empfangen einer Zustimmung von der zweiten Vorrichtung, dass die erste Vorrichtung die erste Aktion in dem ersten Zeitintervall ausführen kann; und
Initiieren der Ausführung der ersten Aktion in dem ersten Zeitintervall.

8. Computerimplementiertes Verfahren, das von einer zweiten Vorrichtung durchgeführt wird, um in Koordination mit einer ersten Vorrichtung zu bestimmen, ob die erste Vorrichtung eine erste Aktion ausführen kann, wobei das Verfahren Folgendes umfasst:

Empfangen (302) einer ersten Nachricht von der ersten Vorrichtung, wobei die erste Nachricht eine Angabe der ersten Aktion, die von der ersten Vorrichtung ausgeführt werden soll, und ein erstes Zeitintervall umfasst, das angibt, wann die erste Aktion ausgeführt werden soll; und
Senden (304) einer zweiten Nachricht an die erste Vorrichtung gemäß einem Argumentationsprotokoll, das zwischen der ersten Vorrichtung und der zweiten Vorrichtung definiert ist, wobei die zweite Nachricht eine erste Antwort im Hinblick darauf, ob die erste Vorrichtung die erste Aktion ausführen kann, und ein zweites Zeitintervall umfasst, in dem die erste Antwort gilt; und
wobei die erste Antwort gemäß dem Argumentationsprotokoll gültig ist, falls das zweite Zeitintervall das erste Zeitintervall überlappt;
und das Verfahren durch Folgendes gekennzeichnet ist:

Austauschen von nachfolgenden Nachrichten mit der ersten Vorrichtung gemäß dem Argumentationsprotokoll, wobei jede nachfolgende Nachricht eine nachfolgende Antwort in Bezug auf die erste Aktion und ein entsprechendes nachfolgendes Zeitintervall umfasst, in dem die Antwort gültig ist; und

wobei jede nachfolgende Antwort gemäß dem Argumentationsprotokoll gültig ist, falls das entsprechende nachfolgende Zeitprotokoll das erste Zeitintervall überlappt; wobei die zweite Nachricht ein Tupel der folgenden Form umfasst:

$$(a_i, \ a_j, \ T, \ C, \ ID, \ S),$$

wobei $a_i$ eine Kennung für die zweite Vorrichtung ist, $a_j$ eine Kennung für die erste Vorrichtung ist, T eine Zielidentifikationsnummer ist, ID eine Identifikationsnummer für die zweite Nachricht ist, C die erste Antwort umfasst und S das zweite Zeitintervall ist.

9. Verfahren nach Anspruch 8, wobei S in der Form eines Intervalls S = (t3, t4) ist und wobei die erste Aktion zwischen den Zeitpunkten t3 und t4 gilt.

10. Verfahren nach einem der Ansprüche 8 bis 9, wobei die erste Antwort in der zweiten Nachricht einen Konflikt zwischen der Ausführung der ersten Aktion durch die erste Vorrichtung und einem ersten Ziel identifiziert und wobei das erste Intervall ferner verwendet wird, um den Konflikt basierend auf einer Priorität der ersten Aktion gegenüber dem ersten Ziel während des ersten Zeitintervalls zu lösen.

11. Verfahren nach einem der Ansprüche 8 bis 9, wobei die erste Antwort in der zweiten Nachricht identifiziert, dass die Ausführung der ersten Aktion durch die erste Vorrichtung in dem ersten Zeitintervall und die Ausführung einer zweiten Aktion durch die zweite Vorrichtung in dem zweiten Zeitintervall zu einem Konflikt in Bezug auf das erste Ziel führt; und wobei die Länge des ersten Zeitintervalls und die Länge des zweiten Zeitintervalls verwendet werden, um eine Priorität der ersten Aktion in Bezug auf die zweite Aktion zu bestimmen und dadurch den Konflikt zu lösen.

12. Verfahren nach Anspruch 11, wobei das erste Ziel mit der ersten Vorrichtung assoziiert ist und wobei die Ausführung der zweiten Aktion mit einem zweiten Ziel für die zweite Vorrichtung assoziiert ist; und wobei eine relative Priorität des ersten Ziels gegenüber dem zweiten Ziel verwendet wird, um eine Priorität der ersten Aktion in Bezug auf die zweite Aktion zu bestimmen und dadurch den Konflikt zu lösen.

13. Verfahren nach einem der vorhergehenden Ansprüche, wobei das zweite Zeitintervall das erste Zeitintervall überlappt, falls das erste Zeitintervall und das zweiten Zeitintervall eines von Folgenden erfüllen:

beginnt;
endet;
überlappt;
während; oder
ist gleich
Kriterien der Zeitintervalllogik nach Allen.

14. Erste Vorrichtung (100), die dazu ausgelegt ist, in Koordination mit einer zweiten Vorrichtung zu bestimmen, ob eine erste Vorrichtung eine erste Aktion ausführen kann, wobei die erste Vorrichtung zu Folgendem ausgelegt ist:

Senden einer ersten Nachricht an die zweite Vorrichtung, wobei die erste Nachricht eine Angabe der ersten Aktion, die von der ersten Vorrichtung ausgeführt werden soll, und ein erstes Zeitintervall umfasst, das angibt, wann die erste Aktion ausgeführt werden soll; und
Empfangen einer zweiten Nachricht von der zweiten Vorrichtung gemäß einem Argumentationsprotokoll, das zwischen der ersten Vorrichtung und der zweiten Vorrichtung definiert ist, wobei die zweite Nachricht eine erste Antwort im Hinblick darauf, ob die erste Vorrichtung die erste Aktion ausführen kann, und ein zweites Zeitintervall umfasst, in dem die erste Antwort gilt; und
wobei die erste Antwort gemäß dem Argumentationsprotokoll gültig ist, falls das zweite Zeitintervall das erste Zeitintervall überlappt;
und die erste Vorrichtung (100) **dadurch gekennzeichnet ist, dass** sie zu Folgendem ausgelegt ist:

Austauschen von nachfolgenden Nachrichten mit der zweiten Vorrichtung gemäß dem Argumentationsprotokoll, wobei jede nachfolgende Nachricht eine nachfolgende Antwort in Bezug auf die erste Aktion und ein entsprechendes nachfolgendes Zeitintervall umfasst, in dem die Antwort gilt; und

wobei jede nachfolgende Antwort gemäß dem Argumentationsprotokoll gültig ist, falls das entsprechende nachfolgende Zeitprotokoll das erste Zeitintervall überlappt; wobei die erste Nachricht ein Tupel der folgenden Form umfasst:

$$(a_i, a_j, T, C, ID, S),$$

wobei $a_i$ eine Kennung für die erste Vorrichtung ist, $a_j$ eine Kennung für die zweite Vorrichtung ist, T eine Zielidentifikationsnummer ist, ID eine Identifikationsnummer für die erste Nachricht ist, C die Angabe der ersten von der ersten Vorrichtung auszuführenden Aktion umfasst und S das erste Zeitintervall ist.

15. Erste Vorrichtung nach Anspruch 14, die zum Durchführen des Verfahrens nach einem der Ansprüche 2 bis 7 ausgelegt ist.

16. Zweite Vorrichtung (100), die dazu ausgelegt ist, in Koordination mit einer ersten Vorrichtung zu bestimmen, ob die erste Vorrichtung eine erste Aktion ausführen kann, wobei die zweite Vorrichtung zu Folgendem ausgelegt ist:

Empfangen einer ersten Nachricht von der ersten Vorrichtung, wobei die erste Nachricht eine Angabe der ersten Aktion, die von der ersten Vorrichtung ausgeführt werden soll, und ein erstes Zeitintervall umfasst, das angibt, wann die erste Aktion ausgeführt werden soll; und

Senden einer zweiten Nachricht an die erste Vorrichtung gemäß einem Argumentationsprotokoll, das zwischen der ersten Vorrichtung und der zweiten Vorrichtung definiert ist, wobei die zweite Nachricht eine erste Antwort im Hinblick darauf, ob die erste Vorrichtung die erste Aktion ausführen kann, und ein zweites Zeitintervall umfasst, in dem die erste Antwort gilt; und

wobei die erste Antwort gemäß dem Argumentationsprotokoll gültig ist, falls das zweite Zeitintervall das erste Zeitintervall überlappt; und

und die zweite Vorrichtung (100) **dadurch gekennzeichnet ist, dass** sie zu Folgendem ausgelegt ist:

Austauschen von nachfolgenden Nachrichten mit der ersten Vorrichtung gemäß dem Argumentationsprotokoll, wobei jede nachfolgende Nachricht eine nachfolgende Antwort in Bezug auf die erste Aktion und ein entsprechendes nachfolgendes Zeitintervall umfasst, in dem die Antwort gültig ist; und

wobei jede nachfolgende Antwort gemäß dem Argumentationsprotokoll gültig ist, falls das entsprechende nachfolgende Zeitintervall das erste Zeitintervall überlappt;

wobei die zweite Nachricht ein Tupel der folgenden Form umfasst:

$$(a_i, a_j, T, C, ID, S),$$

wobei $a_i$ eine Kennung für die zweite Vorrichtung ist, $a_j$ eine Kennung für die erste Vorrichtung ist, T eine Zielidentifikationsnummer ist, ID eine Identifikationsnummer für die zweite Nachricht ist, C die erste Antwort umfasst und S das zweite Zeitintervall ist.

17. Zweite Vorrichtung nach Anspruch 16, die zum Durchführen des Verfahrens nach einem der Ansprüche 8 bis 12 ausgelegt ist.

## Revendications

1. Procédé mis en œuvre par ordinateur réalisé par un premier dispositif pour déterminer, en coordination avec un deuxième dispositif, si le premier dispositif peut ou non réaliser une première action, le procédé comprenant :

l'envoi (202) d'un premier message au deuxième dispositif, dans lequel le premier message comprend une indication de la première action à réaliser par le premier dispositif, et un premier intervalle de temps indiquant quand la première action doit être réalisée ; et

la réception (204) d'un deuxième message depuis le deuxième dispositif selon un protocole d'argumentation défini entre le premier dispositif et le deuxième dispositif, dans lequel le deuxième message comprend une première réponse relative à si le premier dispositif peut ou non réaliser la première action, et un deuxième intervalle de temps dans lequel la première réponse est applicable ; et

dans lequel la première réponse est valide selon le protocole d'argumentation si le deuxième intervalle de temps chevauche le premier intervalle de temps ;

et le procédé étant **caractérisé par** :

l'échange de messages ultérieurs avec le deuxième dispositif selon le protocole d'argumentation, dans lequel chaque message ultérieur comprend une réponse ultérieure relative à la première action, et un intervalle de temps ultérieur correspondant dans lequel ladite réponse est applicable ; et

dans lequel chaque réponse ultérieure est valide selon le protocole d'argumentation si l'intervalle de temps ultérieur correspondant chevauche le premier intervalle de temps, dans lequel le premier message comprend un uplet sous la forme suivante

$$\langle a_i, a_j, T, C, ID, S \rangle,$$

dans lequel $a_i$ est un identifiant du premier dispositif, $a_j$ est un identifiant du deuxième dispositif, T est un numéro d'identification cible, ID est un numéro d'identification du premier message, C comprend l'indication de la première action à réaliser par le premier dispositif, et S est le premier intervalle de temps.

2. Procédé selon la revendication 1, dans lequel S est sous la forme d'un intervalle, S=(t1, t2), et dans lequel la première action doit être réalisée entre les temps t1 et t2.

3. Procédé selon l'une quelconque des revendications précédentes, dans lequel la première réponse dans le deuxième message identifie un conflit entre une réalisation de la première action par le premier dispositif et un premier objectif et dans lequel le premier intervalle de temps est en outre utilisé pour résoudre le conflit sur la base d'une priorité de la première action par rapport au premier objectif au cours du premier intervalle de temps.

4. Procédé selon l'une quelconque des revendications 1 à 3, dans lequel la première réponse dans le deuxième message identifie qu'une réalisation de la première action par le premier dispositif dans le premier intervalle de temps et une réalisation d'une deuxième action par le deuxième dispositif dans le deuxième intervalle de temps engendrent un conflit par rapport à un premier objectif ; et

dans lequel la longueur du premier intervalle de temps et la longueur du deuxième intervalle de temps sont utilisées pour déterminer une priorité de la première action par rapport à la deuxième action et ainsi résoudre le conflit.

5. Procédé selon la revendication 4, dans lequel le premier objectif est associé au premier dispositif et dans lequel une réalisation de la deuxième action est associée à un deuxième objectif pour le deuxième dispositif ; et

dans lequel une priorité relative du premier objectif par rapport au deuxième objectif est utilisée pour déterminer une priorité de la première action par rapport à la deuxième action et ainsi résoudre le conflit.

6. Procédé selon l'une quelconque des revendications précédentes, dans lequel l'étape de l'envoi (202) du premier message comprend en outre :

la mise à jour d'un ensemble d'engagements, $\mathcal{C}$, pris par le premier dispositif avec la première action, C, et le premier intervalle de temps, S, selon <C,S>$\in \mathcal{C}$.

7. Procédé selon l'une quelconque des revendications précédentes, comprenant en outre :

la réception d'un accord du deuxième dispositif que le premier dispositif peut réaliser la première action dans le premier intervalle de temps ; et

l'initiation d'une réalisation de la première action dans le premier intervalle de temps.

8. Procédé mis en œuvre par ordinateur réalisé par un deuxième dispositif pour déterminer, en coordination avec un premier dispositif, si le premier dispositif peut ou non réaliser une première action, le procédé comprenant :

la réception (302) d'un premier message depuis le premier dispositif, dans lequel le premier message comprend une indication de la première action à réaliser par le premier dispositif, et un premier intervalle de temps indiquant quand la première action doit être réalisée ; et

l'envoi (304) d'un deuxième message au premier dispositif selon un protocole d'argumentation défini entre le premier dispositif et le deuxième dispositif, dans lequel le deuxième message comprend une première réponse relative à si le premier dispositif peut ou non réaliser la première action, et un deuxième intervalle de temps dans lequel la première réponse est applicable ; et

dans lequel la première réponse est valide selon le protocole d'argumentation si le deuxième intervalle de temps chevauche le premier intervalle de temps ;

et le procédé étant **caractérisé par** :

l'échange de messages ultérieurs avec le premier dispositif selon le protocole d'argumentation, dans lequel chaque message ultérieur comprend une réponse ultérieure relative à la première action, et un intervalle de temps ultérieur correspondant dans lequel ladite réponse est valide ; et

dans lequel chaque réponse ultérieure est valide selon le protocole d'argumentation si l'intervalle de temps ultérieur correspondant chevauche le premier intervalle de temps, dans lequel le deuxième message comprend un uplet sous la forme suivante

$$\langle a_i, a_j, T, C, ID, S \rangle,$$

dans lequel $a_i$ est un identifiant du deuxième dispositif, $a_j$ est un identifiant du premier dispositif, T est un numéro d'identification cible, ID est un numéro d'identification du deuxième message, C comprend la première réponse, et S est le deuxième intervalle de temps.

9. Procédé selon la revendication 8, dans lequel S est sous la forme d'un intervalle, S=(t3, t4), et dans lequel la première réponse est applicable entre les temps t3 et t4.

10. Procédé selon l'une quelconque des revendications 8 et 9, dans lequel la première réponse dans le deuxième message identifie un conflit entre une réalisation de la première action par le premier dispositif et un premier objectif et dans lequel le premier intervalle de temps est en outre utilisé pour résoudre le conflit sur la base d'une priorité de la première action par rapport au premier objectif au cours du premier intervalle de temps.

11. Procédé selon l'une quelconque des revendications 8 et 9, dans lequel la première réponse dans le deuxième message identifie qu'une réalisation de la première action par le premier dispositif dans le premier intervalle de temps et une réalisation d'une deuxième action par le deuxième dispositif dans le deuxième intervalle de temps engendrent un conflit par rapport à un premier objectif ; et

dans lequel la longueur du premier intervalle de temps et la longueur du deuxième intervalle de temps sont utilisées pour déterminer une priorité de la première action par rapport à la deuxième action et ainsi résoudre le conflit.

12. Procédé selon la revendication 11, dans lequel le premier objectif est associé au premier dispositif et dans lequel une réalisation de la deuxième action est associée à un deuxième objectif pour le deuxième dispositif ; et

dans lequel une priorité relative du premier objectif par rapport au deuxième objectif est utilisée pour déterminer une priorité de la première action par rapport à la deuxième action et ainsi résoudre le conflit.

13. Procédé selon l'une quelconque des revendications précédentes, dans lequel le deuxième intervalle de temps chevauche le premier intervalle de temps si le premier intervalle de temps et le deuxième intervalle de temps satisfont l'une quelconque des relations suivantes :

démarre ;
termine ;
chevauche ;
se déroule pendant ; ou
est égal à
des critères de la logique des intervalles de temps d'Allen.

14. Premier dispositif (100) configuré pour déterminer, en coordination avec un deuxième dispositif, si le premier dispositif peut ou non réaliser une première action, dans lequel le premier dispositif est configuré pour :

envoyer un premier message au deuxième dispositif, dans lequel le premier message comprend une indication de la première action à réaliser par le premier dispositif, et un premier intervalle de temps indiquant quand la première action doit être réalisée ; et

recevoir un deuxième message depuis le deuxième dispositif selon un protocole d'argumentation défini entre le premier dispositif et le deuxième dispositif, dans lequel le deuxième message comprend une première réponse relative à si le premier dispositif peut ou non réaliser la première action, et un deuxième intervalle de temps dans lequel la première réponse est applicable ; et

dans lequel la première réponse est valide selon le protocole d'argumentation si le deuxième intervalle de temps chevauche le premier intervalle de temps ;

et le premier dispositif (100) est **caractérisé en ce qu'**il est configuré pour :

échanger des messages ultérieurs avec le deuxième dispositif selon le protocole d'argumentation, dans lequel chaque message ultérieur comprend une réponse ultérieure relative à la première action, et un intervalle de temps ultérieur correspondant dans lequel ladite réponse est applicable ; et

dans lequel chaque réponse ultérieure est valide selon le protocole d'argumentation si l'intervalle de temps ultérieur correspondant chevauche le premier intervalle de temps, dans lequel le premier message comprend un uplet sous la forme suivante

$$\langle a_i, a_j, T, C, ID, S \rangle,$$

dans lequel $a_i$ est un identifiant du premier dispositif, $a_j$ est un identifiant du deuxième dispositif, T est un numéro d'identification cible, ID est un numéro d'identification du premier message, C comprend l'indication de la première action à réaliser par le premier dispositif, et S est le premier intervalle de temps.

**15.** Premier dispositif selon la revendication 14, configuré pour réaliser le procédé selon l'une quelconque des revendications 2 à 7.

**16.** Deuxième dispositif (100) configuré pour déterminer, en coordination avec un premier dispositif, si le premier dispositif peut ou non réaliser une première action, dans lequel le deuxième dispositif est configuré pour :

recevoir un premier message depuis le premier dispositif, dans lequel le premier message comprend une indication de la première action à réaliser par le premier dispositif, et un premier intervalle de temps indiquant quand la première action doit être réalisée ; et

envoyer un deuxième message au premier dispositif selon un protocole d'argumentation défini entre le premier dispositif et le deuxième dispositif, dans lequel le deuxième message comprend une première réponse relative à si le premier dispositif peut ou non réaliser la première action, et un deuxième intervalle de temps dans lequel la première réponse est applicable ; et

dans lequel la première réponse est valide selon le protocole d'argumentation si le deuxième intervalle de temps chevauche le premier intervalle de temps ; et

le deuxième dispositif (100) étant **caractérisé en ce qu'**il est configuré pour :

échanger des messages ultérieurs avec le premier dispositif selon le protocole d'argumentation, dans lequel chaque message ultérieur comprend une réponse ultérieure relative à la première action, et un intervalle de temps ultérieur correspondant dans lequel ladite réponse est valide ; et

dans lequel chaque réponse ultérieure est valide selon le protocole d'argumentation si l'intervalle de temps ultérieur correspondant chevauche le premier intervalle de temps ;

dans lequel le deuxième message comprend un uplet sous la forme suivante

$$\langle a_i, a_j, T, C, ID, S \rangle,$$

dans lequel $a_i$ est un identifiant du deuxième dispositif, $a_j$ est un identifiant du premier dispositif, T est un numéro d'identification cible, ID est un numéro d'identification du deuxième message, C comprend la première réponse, et S est le deuxième intervalle de temps.

17. Deuxième dispositif selon la revendication 16, configuré pour réaliser le procédé selon l'une quelconque des revendications 8 à 12.

Fig. 1

200

Send a first message to the second device, wherein the first message comprises i) an indication of the first action to be performed by the first device and ii) a first time interval indicating when the first action is to be performed

202

Receive a second message from the second device according to an argumentation protocol defined between the first device and the second device, wherein the second message comprises i) a first response related to whether the first device can perform the first action, and ii) a second time interval in which the first response is applicable wherein the first response is valid according to the argumentation protocol if the second time interval overlaps the first time interval

204

Fig. 2

300

Receive a first message from the first device,
wherein the first message comprises i) an indication
of the first action to be performed by the first device
and ii) a first time interval indicating when
the first action is to be performed

— 302

Send a second message to the first device according
to an argumentation protocol defined between the first
device and the second device, wherein the second
message comprises i) a first response related to
whether the first device can perform the first action,
and ii) a second time interval in which the first
response is applicable wherein the first response
is valid according to the argumentation protocol if the
second time interval overlaps the first time interval

— 304

Fig. 3

Fig. 4

| **N**(oise controller) |
| :---: |
| Inquiry to A: Why Play? |

— 504

| **A**(udio station) |
| :---: |
| Answer: Planner user request [16:00-18:00] |

— 506

502 —

| Computes that Play is below threshold |
| :---: |

| **N**(oise controller) |
| :---: |
| OK |

— 508

Fig. 5

Fig. 6

EP 4 342 140 B1

EP 4 342 140 B1

Interleaved
dialogues

Another device
joins the dialogue

User preferences

| A |
|---|
| Don't boil? |

| N |
|---|
| Boil (spontaneous) is preferred over Play (planned) |

| A |
|---|
| Retract: Don't boil? |

| A |
|---|
| Concede: OK |

Fig. 6 (*continued*)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3506567 A1
- US 2018054376 A1
- US 2016378084 A1

**Non-patent literature cited in the description**

- **H. PRAKKEN**. Coherence and Flexibility in Dialogue Games for Argumentation,. *J. Log. Comput.*, December 2005, vol. 15 (6), 1009-1040
- **X. FAN** ; **F. TONI**. A General Framework for Sound Assumption-Based Argumentation Dialogues,. *Artif. Intell.*, 2014, vol. 216, 20-54
- **OZMEN, M. O** ; **LI, X.** ; **CHU, A.** ; **CELIK, Z. B** ; **HOXHA, B.** ; **ZHANG, X**. Discovering IoT physical channel vulnerabilities. Cornell University Library, 201 Olin Library Cornell University Ithaca, 03 February 2021
- **E. LOVELLETTE** ; **H. HEXMOOR** ; **K. RODRIGUEZ**. Automated argumentation for collaboration among cyber-physical system actors at the edge of the Internet of Things,. *Internet of Things*, 2019, vol. 5 (March 2019), 84-96